# EUROPÄISCHE PATENTSCHRIFT

(11) **EP 3 595 881 B1**
(45) Veröffentlichungstag und Bekanntmachung des Hinweises auf die Patenterteilung: **25.05.2022**
(21) Anmeldenummer: 18700905.5
(22) Anmeldetag: 18.01.2018
(51) Int. Cl.: B29D 30/66

(54) **SPIKE-SETZPISTOLE UND VERFAHREN ZUM SETZEN VON SPIKES**
SPIKE SETTING GUN AND METHOD FOR SETTING SPIKES
PISTOLET DE POSE DE CRAMPONS ET PROCÉDÉ POUR LA POSE DE CRAMPONS

(30) Priorität: 17.03.2017 DE 102017204481
(43) Veröffentlichungstag der Anmeldung: 22.01.2020
(73) Patentinhaber: Continental Reifen Deutschland GmbH, 30165 Hannover (DE)
(72) Erfinder: KOCH, Tim, 30900 Wedemark (DE); LUDWIG, Jens, 30519 Hannover (DE); HARISCH, Ralph, 34308 Bad Emstal (DE); DIETRICH, Holger, 30938 Burgwedel (DE); SCHLITTENHARD, Jan, 30900 Wedemark (DE)
(74) Vertreter: Continental Corporation
(86) Internationale Anmeldenummer: PCT/EP2018/051140
(87) Internationale Veröffentlichungsnummer: WO 2018/166674

(56) Entgegenhaltungen:
- DE-B- 1 247 617
- DE-B- 1 278 107
- US-A- 3 387 352
- US-A- 3 507 031

## Beschreibung

Die Erfindung betrifft eine Spike-Setzpistole mit einem Pistolengehäuse, einem Pistolenkopf, einer mittels eines Antriebes zwischen einer Ausgangsposition und einer Setzposition verfahrbaren Setzeinrichtung, welche einen Spike aufnimmt, und zumindest drei schwenkbar gelagerten und um die Hauptachse der Spike-Setzpistole angeordneten Spreizfingern. Die Erfindung betrifft ferner ein Verfahren zum Setzen von Spikes in Spikelöcher eines Laufstreifens eines Fahrzeugluftreifens mittels einer erfindungsgemäßen Spike-Setzpistole.

Eine derartige Spike-Setzpistole ist beispielsweise aus der US 3 507 031 A bekannt. Diese Spike-Setzpistole weist vorzugsweise drei Spreizfinger mit jeweils einem Spreizelement auf, wobei die Spreizelemente beim Setzen eines Spikes in das jeweilige Spikeloch eintauchen. Die Spreizfinger sind an ihren den Spreizelementen abgewandten Enden am Pistolengehäuse schwenkbar angelenkt. Die Setzeinrichtung weist einen Setzbolzen auf, welcher von einer Feder umgeben ist. Durch Betätigen der Spike-Setzpistole wird der Setzbolzen in Bewegung versetzt und derart ein Spike in den Pistolenlauf geladen. Der geladene Spike wird auf die Spreizfinger geschoben, wodurch diese ausschwenken, das Spikeloch aufweiten und der Spike in das Spikeloch eingesetzt wird. Gleichzeitig wird dabei die Feder unter Spannung gesetzt. Nachfolgend werden die am Pistolengehäuse angelenkten Spreizfinger durch Wegbewegen des Pistolengehäuses aus dem Spikeloch gezogen, wobei die Feder weiter komprimiert wird. Anschließend wird der Setzbolzen gelöst, sodass dieser durch die Federkraft zurückgezogen wird und die Spreizfinger wieder zusammengefahren werden.

Aus der DE 1 247 617 B ist eine Spike-Setzpistole mit einem Pistolengehäuse, an welchem drehbar gelagerte Spannbacken angeordnet sind, bekannt. Zum Setzen eines Spikes wird dieser mittels eines entlang der Hauptachse der Spike-Setzpistole bewegbaren Stempels zunächst zwischen den Spannbacken eingespannt und nachfolgend eingesetzt. Es ist ein die Spannbacken umgebender Ring vorgesehen, welcher relativ zu den Spannbacken in Richtung der Hauptachse der Spike-Setzpistole bewegbar ist und mittels welchem die Spannbacken während des Einsetzens des Spikes gegen den Spike gedrückt werden.

Beim Setzen eines Spikes mittels der bekannten Spike-Setzpistolen wird die den Spike haltende Setzeinrichtung derart verfahren, dass der Fuß des Spikes zumindest teilweise über die in das Spikeloch eingetauchten Spreizelemente der Spreizfinger hinausgeschoben wird, sodass der Spikefuß vom Gummi des Laufstreifens umschlossen wird. Der obere Teil des Spikes, der Spikekörper, befindet sich dabei noch zwischen den Spreizfingern. Das Austauchen der Spreizfinger aus dem Spikeloch und das Loslassen des Spikes vom Setzbolzen erfolgen gleichzeitig. Bei den bekannten Verfahren wird der Spike vom Setzbolzen daher losgelassen, bevor die Spreizfinger aus dem Spikeloch entfernt worden sind. Dies kann dazu führen, dass der Spike beim Herausbewegen der Spreizfinger aus dem Spikeloch seine Setztiefe ändert. Als Folge davon wird der Spike wieder geringfügig aus dem Spikeloch herausgezogen bevor er vollständig vom Gummi des Laufstreifens umschlossen ist. Darüber hinaus kann der eingesetzte Spike beim Austauchen der Spreizfinger kippen, sodass der gesetzte Spike nicht wie gewünscht orientiert ist. Diese unerwünschten Bewegungen von bereits eingesetzten Spikes treten zufällig sowie in unterschiedlichem Ausmaß auf und können daher nicht ohne weiteres, beispielsweise durch eine Veränderung der Setztiefe, für die zudem gesetzlichen Grenzwerte gelten, kompensiert werden.

Da die Setztiefe eines in den Laufstreifen gesetzten Spikes unmittelbar den Spikesitz beeinflusst, ist sie ein wesentliches Qualitätsmerkmal eines einen bespikten Laufstreifen aufweisenden Fahrzeugluftreifens.

Der Erfindung liegt daher die Aufgabe zu Grunde, ein Verfahren und eine Spike-Setzpistole der eingangs genannten Art zu Verfügung zu stellen, mittels welchem bzw. welcher ein präzises Setzen von Spikes ohne obige Nachteile möglich ist.

Was die Spike-Setzpistole betrifft, wird die gestellte Aufgabe erfindungsgemäß nach Anspruch 1 dadurch gelöst, dass die Spreizfinger mittels zumindest eines separaten Antriebes simultan und parallel zur Hauptachse der Spike-Setzpistole sowie relativ zur Setzeinrichtung verfahrbar sind.

Was das Verfahren betrifft, wird die gestellte Aufgabe erfindungsgemäß nach Anspruch 8 durch folgende nacheinander ablaufende Schritte gelöst:
a. Aufnahme eines Spikes von der Setzeinrichtung,
b. Verfahren der Spreizfinger zum Eintauchen der Spreizelemente in das Spikeloch durch Betätigen des separaten Antriebes,
c. Verfahren der Setzeinrichtung, wobei die Spreizfinger auseinanderbewegt, das Spikeloch von den Spreizelementen aufgeweitet und der Spike in das Spikeloch eingesetzt werden,
d. Herausfahren der Spreizfinger aus dem Spikeloch durch Betätigen des separaten Antriebes, wobei der Spike von der Setzeinrichtung im Spikeloch gehalten wird,
e. Zurückfahren der Setzeinrichtung.

Bei der Erfindung hält der Setzbolzen den eingesetzten Spike solange nieder, bis sein Spikekörper vom Gummimaterial des Laufstreifens komplett umschlossen ist und daher beim Loslassen und Zurückfahren der Setzeinrichtung bereits sicher und zuverlässig in seiner gewünschten Position gehalten wird. Die Setzeinrichtung wirkt daher als Niederhalter und schützt den Spike vor einer Positionsänderung gegenüber dem Laufstreifen. Der separate und gegenüber der Setzeinrichtung gesondert betätigbare Antrieb der Spreizfinger ermöglicht nach dem Spikepositionieren ein Zurückfahren der Spreizfinger ohne gleichzeitiges Zurückfahren der Setzeinrichtung. Die Setzeinrichtung kann den Spike in Position im Spikeloch halten, bis die Spreizfinger wegbewegt sind.

Bei einer bevorzugten, mit einem geringen baulichen Aufwand verbundenen Ausführungsvariante sind sämtliche Spreizfinger mittels eines einzigen Antriebes verfahrbar. Bei alternativen Ausführungsvarianten der Erfindung ist jeder Spreizfinger mittels eines eigenen Antriebes verfahrbar oder es sind zumindest zwei Spreizfinger mit einem gemeinsamen Antrieb verfahrbar.

Für eine optimale Setzgenauigkeit ist es von Vorteil, wenn die Spreizfinger gleichmäßig um die Hauptachse der Spike-Setzpistole angeordnet sind. In diesem Zusammenhang ist es ferner von Vorteil, wenn eine größere Anzahl von Spreizfingern, insbesondere bis zu sechs Spreizfinger, vorgesehen sind.

Bei einer bevorzugten Ausführungsvariante sind die Spreizfinger jeweils über ein Gelenk relativ zum Pistolengehäuse bewegbar geführt, sodass auf zweckmäßige Weise sowohl die durch den/die Antrieb/e verursachten Bewegungen der Spreizfinger als auch ihre Schwenkbewegungen ermöglicht sind.

Bevorzugter Weise werden in Schritt c) des Verfahrens die Spreizfinger vom Spike auseinander bewegt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen

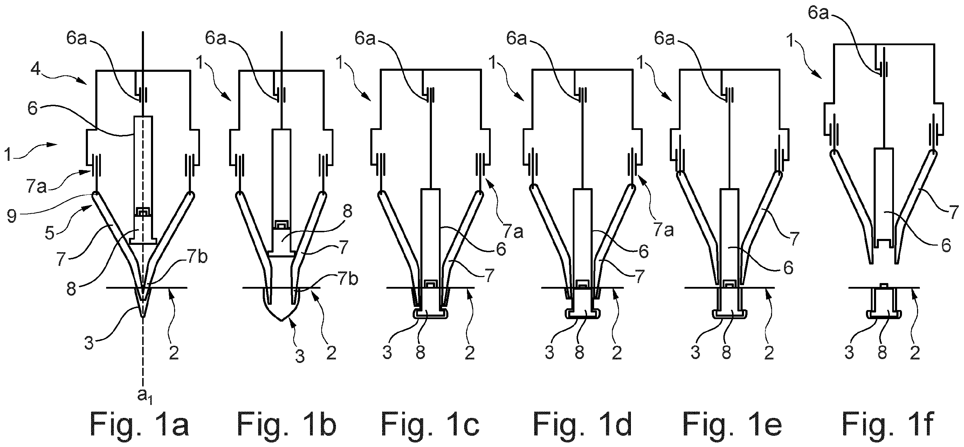

Fig. 1a bis Fig. 1f vereinfachte schematische Skizzen einer Spike-Setzpistole in aufeinanderfolgenden Stadien während des Setzens eines Spikes.

In Fig. 1a bis Fig. 1f ist unterhalb einer Spike-Setzpistole 1 ein kurzer Abschnitt der Außenkontur eines Laufstreifens 2 angedeutet, welcher in bekannter Weise mit Spikelöchern versehen ist, von welchen in Fig. 1a bis Fig. 1g ein einziges Spikeloch 3 gezeigt ist. Die Hauptachse a₁ der Spike-Setzpistole ist in Fig. 1a mit einer gestrichelten Linie angedeutet. Vorzugsweise ist die Spike-Setzpistole an einem Positioniermechanismus angeordnet, mittels welchem sie gegenüber den Spikelöchern 3 in bekannter Weise zentriert ausrichtbar ist.

Die Spike-Setzpistole 1 weist ein Pistolengehäuse 4 und einen an diesem angeordneten Pistolenkopf 5 auf. Im Inneren des Pistolengehäuses 4 ist ein entlang der Hauptachse a₁ ausgerichteter Setzbolzen 6 angeordnet, welcher in bekannter Weise in den Pistolenkopf 5 hineinragt. In den Figuren 1a bis 1e ist jeweils jene Lage zu sehen, in welcher der Setzbolzen 6 an seinem freien, in den Figuren unteren Ende einen am Spikepin erfassten Spike 8 hält.

Der Setzbolzen 6 ist mit einem Bolzenantrieb 6a, welcher in bekannter Weise ausgeführt sein kann, entlang der Hauptachse a₁ bewegbar und derart zwischen einer Ausgangsposition (Fig. 1a) und einer Setzposition (Fig. 1c) verfahrbar.

Der Pistolenkopf 5 weist drei bis sechs, vorzugsweise gleichmäßig um die Hauptachse a₁ angeordnete Spreizfinger 7 auf. Beim gezeigten Ausführungsbeispiel sind vier jeweils um 90° zueinander versetzte Spreizfinger 7 vorgesehen, von welchen in den Figuren zwei dargestellt sind. Die Spreizfinger 7 sind derart gestaltet, dass sie an ihren freien Enden insbesondere in bekannter Weise Spreizelemente 7b bilden oder aufweisen. Die Spreizfinger 7 sind vorzugsweise gemeinsam über einen Fingerantrieb 7a, welcher insbesondere ein Linierantrieb ist, am Pistolengehäuse 4 oder an einem mit dem Pistolengehäuse 4 verbundenen Teil angeordnet. Jeder Spreizfinger 7 oder jeweils zumindest zwei Spreizfinger 7 können über separate Fingerantriebe bewegbar sein. Jeder Spreizfinger 7 ist dabei ferner über ein in den Figuren angedeutetes und in Fig. 1a mit 9 bezeichnetes Gelenk relativ zum Pistolengehäuse 4 bewegbar geführt, sodass die Spreizfinger 7 auseinander und zueinander bewegbar bzw. schwenkbar sind. Durch

Betätigen des/der Fingerantriebe(s) 7a sind die Spreizfinger 7 simultan und parallel zur Hauptachse a₁ sowie relativ zum Setzbolzen 6 verfahrbar. Mittels zumindest eines in den Figuren nicht gezeigten Spannelementes, insbesondere einer Feder, beispielsweise einer an den Außenseiten der Spreizfinger umlaufend positionierten Ringfeder, werden die Spreizfinger 7 zueinander gedrückt.

Nach dem Laden eines Spikes 8 in den Pistolenkopf 5 werden bei bereits entsprechend ausgerichteter Spike-Setzpistole 1 durch Betätigen des Fingerantriebes 7a die Spreizelemente 7b in Richtung des Spikeloches 3 gefahren, bis die Spreizelemente 7b in das Spikeloch 3 hineingefahren sind (Fig. 1a). Wie Fig. 1b und Fig. 1c entnehmbar ist, wird anschließend der Setzbolzen 6 mittels des Bolzenantriebes 6a entlang der Hauptachse a₁ in Richtung des Spikeloches 3 bewegt, wobei der Spike 8 die Spreizfinger 7 auseinanderdrückt und die Spreizelemente 7b das Spikeloch 3 aufweiten (Fig. lb). Der Bolzenantrieb 6a fährt den Setzbolzen 6 weiter in Richtung des Spikeloches 3 und schiebt dabei den Spike 8 in das aufgeweitete Spikeloch 3 bis dieser am Boden des Spikeloches 3 aufsitzt (Fig. 1c). Im Anschluss daran werden sämtliche Spreizfinger 7 mittels des Fingerantriebes 7a simultan angehoben und derart aus dem Spikeloch 3 gezogen, wobei der Spike 8 weiterhin vom Setzbolzen 6 gehalten wird (Fig. 1d). Dabei wird der eingesetzte Spike 8 seitlich zunehmend vom Gummimaterial des Laufstreifens 2 fest umschlossen. Sobald die Spreizfinger 7 vollständig aus dem Spikeloch 3 entfernt sind (Fig. 1e), wird die Spike-Setzpistole 1 angehoben, wobei der Setzbolzen 6 den bereits im Gummimaterial des Laufstreifens gehaltenen Spike 8 loslässt und der Bolzenantrieb 6a den Setzbolzen 6 zurückfährt (Fig. lf). Der Setzbolzen 6 wird in seine Ausgangsposition bewegt, wobei die vom Spannelement beaufschlagten Spreizfinger 7 zueinander gedrückt werden.

Die Hauptachse a₁ der Spike-Setzpistole 1 wird auf das nächste Spikeloch 3 des Laufstreifens 2 ausgerichtet und in dieses, nach erneutem Laden der Spike-Setzpistole 1, auf die beschriebene Weise ein Spike 8 eingesetzt. Der Vorgang wird solange wiederholt bis sämtliche Spikelöcher 3 des Laufstreifens 2 mit Spikes 8 versehen sind.

Anstelle des Setzbolzens 6 können Greiffinger oder dergleichen als Setzeinrichtung vorgesehen sein.

### Bezugsziffernliste

- 1: Spike-Setzpistole
- 2: Laufstreifen
- 3: Spikeloch
- 4: Pistolengehäuse
- 5: Pistolenkopf
- 6: Setzbolzen
- 6a: Bolzenantrieb
- 7: Spreizfinger
- 7a: Fingerantrieb
- 7b: Spreizelemente
- 8: Spike
- 9: Gelenk
- a₁: Hauptachse

## Patentansprüche

1. Spike-Setzpistole (1) mit einem Pistolengehäuse (4), einem Pistolenkopf (5), einer mittels eines Antriebes (6a) zwischen einer Ausgangsposition und einer Setzposition verfahrbaren Setzeinrichtung (6), welche einen Spike (8) aufnimmt, und mit zumindest drei schwenkbar gelagerten und um die Hauptachse (a₁) der Spike-Setzpistole (1) angeordneten Spreizfingern (7),
**dadurch gekennzeichnet,**
**dass** die Spreizfinger (7) mittels zumindest eines separaten Antriebes (7a) simultan und parallel zur Hauptachse (a₁) der Spike-Setzpistole (1) sowie relativ zur Setzeinrichtung (6) verfahrbar sind.

2. Spike-Setzpistole nach Anspruch 1, **dadurch gekennzeichnet, dass** sämtliche Spreizfinger (7) mittels eines einzigen Antriebes (7a) verfahrbar sind.

3. Spike-Setzpistole nach Anspruch 1, **dadurch gekennzeichnet, dass** jeder Spreizfinger (7) mittels eines eigenen Antriebes (7a) verfahrbar ist.

4. Spike-Setzpistole nach Anspruch 1, **dadurch gekennzeichnet, dass** zumindest zwei Spreizfinger (7) jeweils mittels eines gemeinsamen Antrieb (7a) verfahrbar sind.

5. Spike-Setzpistole nach einem der Ansprüche 1 bis 4, **dadurch gekennzeichnet, dass** die Spreizfinger (7) gleichmäßig um die Hauptachse (a₁) der Spike-Setzpistole (1) angeordnet sind.

6. Spike-Setzpistole nach einem der Ansprüche 1 bis 5, **dadurch gekennzeichnet, dass** sie bis zu sechs Spreizfinger (7) aufweist.

7. Spike-Setzpistole nach einem der Ansprüche 1 bis 6, **dadurch gekennzeichnet, dass** die Spreizfinger (7) jeweils über ein Gelenk (9) relativ zum Pistolengehäuse (4) bewegbar geführt sind.

8. Verfahren zum Setzen von Spikes in Spikelöcher (3) eines Laufstreifens (2) eines Fahrzeugluftreifens mittels einer Spike-Setzpistole (1) nach einem der Ansprüche 1 bis 7, mit folgenden nacheinander ablaufenden Schritten:
a. Aufnahme eines Spikes (8) von der Setzeinrichtung (6),
b. Verfahren der Spreizfinger (7) zum Eintauchen der Spreizelemente (7b) in das Spikeloch (3) durch Betätigen des separaten Antriebes (7a),
c. Verfahren der Setzeinrichtung (6), wobei die Spreizfinger (7) auseinanderbewegt, das Spikeloch (3) von den Spreizelementen (7b) aufgeweitet und der Spike (8) in das Spikeloch (3) eingesetzt werden,
d. Herausfahren der Spreizfinger (7) aus dem Spikeloch (3) durch Betätigen des separaten Antriebes (7a), wobei der Spike (8) von der Setzeinrichtung (6) im Spikeloch (3) gehalten wird,
e. Zurückfahren der Setzeinrichtung (6).

9. Verfahren nach Anspruch 8, **dadurch gekennzeichnet, dass** in Schritt c) die Spreizfinger (7) vom Spike (8) auseinander bewegt werden.

## Claims

1. Spike setting gun (1) with a gun housing (4), a gun head (5), a setting device (6) which can be moved by means of a drive (6a) between a starting position and a setting position and receives a spike (8), and with at least three spreading fingers (7) which are mounted pivotably and are arranged around the main axis (a₁) of the spike setting gun (1),
**characterized**
**in that** the spreading fingers (7) can be moved by means of at least one separate drive (7a) simultaneously and parallel to the main axis (a₁) of the spike setting gun (1) and relative to the setting device (6).

2. Spike setting gun according to Claim 1, **characterized in that** all the spreading fingers (7) can be moved by means of a single drive (7a).

3. Spike setting gun according to Claim 1, **characterized in that** each spreading finger (7) can be moved by means of a dedicated drive (7a).

4. Spike setting gun according to Claim 1, **characterized in that** at least two spreading fingers (7) can be moved in each case by means of a common drive (7a).

5. Spike setting gun according to one of Claims 1 to 4, **characterized in that** the spreading fingers (7) are arranged uniformly around the main axis (a₁) of the spike setting gun (1).

6. Spike setting gun according to one of Claims 1 to 5, **characterized in that** it has up to six spreading fingers (7).

7. Spike setting gun according to one of Claims 1 to 6, **characterized in that** the spreading fingers (7) are guided in each case via a joint (9) in such a way that they can be moved relative to the gun housing (4).

8. Method for setting spikes in spike holes (3) of a tread strip (2) of a pneumatic vehicle tyre by means of a spike setting gun (1) according to one of Claims 1 to 7, with the following successive steps:
a. receiving of a spike (8) by the setting device (6),
b. moving of the spreading fingers (7) in order to dip the spreading elements (7b) into the spike hole (3) by way of actuating of the separate drive (7a),
c. moving of the setting device (6), the spreading fingers (7) being moved apart from one another, the spike hole (3) being widened by the spreading elements (7b), and the spike (8) being inserted into the spike hole (3),
d. moving of the spreading fingers (7) out of the spike hole (3) by way of actuating of the separate drive (7a), the spike (8) being held in the spike hole (3) by the setting device (6),
e. retracting of the setting device (6).

9. Method according to Claim 8, **characterized in that** in step c) the spreading fingers (7) are moved apart from one another by the spike (8).

## Revendications

1. Pistolet de pose de crampons (1) comprenant un corps de pistolet (4), une tête de pistolet (5), un dispositif de pose (6) pouvant être déplacé au moyen d'un entraînement (6a) entre une position de départ et une position de pose, qui reçoit un crampon (8), et comprenant au moins trois doigts d'écartement (7) montés pivotants et agencés autour de l'axe principal (a₁) du pistolet de pose de crampons (1),
**caractérisé en ce que**
les doigts d'écartement (7) peuvent être déplacés simultanément et parallèlement à l'axe principal (a₁) du pistolet de pose de crampons (1) ainsi que par rapport au dispositif de pose (6) au moyen d'au moins un entraînement séparé (7a).

2. Pistolet de pose de crampons selon la revendication 1, **caractérisé en ce que** tous les doigts d'écartement (7) peuvent être déplacés au moyen d'un seul entraînement (7a).

3. Pistolet de pose de crampons selon la revendication 1, **caractérisé en ce que** chaque doigt d'écartement (7) peut être déplacé au moyen d'un entraînement propre (7a).

4. Pistolet de pose de crampons selon la revendication 1, **caractérisé en ce qu'**au moins deux doigts d'écartement (7) peuvent respectivement être déplacés au moyen d'un entraînement commun (7a).

5. Pistolet de pose de crampons selon l'une quelconque des revendications 1 à 4, **caractérisé en ce que** les doigts d'écartement (7) sont agencés de manière uniforme autour de l'axe principal (a₁) du pistolet de pose de crampons (1).

6. Pistolet de pose de crampons selon l'une quelconque des revendications 1 à 5, **caractérisé en ce qu'**il présente jusqu'à six doigts d'écartement (7).

7. Pistolet de pose de crampons selon l'une quelconque des revendications 1 à 6, **caractérisé en ce que** les doigts d'écartement (7) sont guidés chacun par l'intermédiaire d'une articulation (9) de manière mobile par rapport au corps de pistolet (4).

8. Procédé de pose de crampons dans des trous de crampons (3) d'une bande de roulement (2) d'un pneumatique de véhicule au moyen d'un pistolet de pose de crampons (1) selon l'une quelconque des revendications 1 à 7, comprenant les étapes suivantes qui se déroulent successivement :
a. la réception d'un crampon (8) par le dispositif de pose (6),
b. le déplacement des doigts d'écartement (7) pour enfoncer les éléments d'écartement (7b) dans le trou de crampon (3) par actionnement de l'entraînement séparé (7a),
c. le déplacement du dispositif de pose (6), les doigts d'écartement (7) s'espaçant les uns des autres, le trou de crampon (3) étant élargi par les éléments d'écartement (7b) et le crampon (8) étant inséré dans le trou de crampon (3),
d. la sortie des doigts d'écartement (7) du trou de crampon (3) par actionnement de l'entraînement séparé (7a), le crampon (8) étant maintenu dans le trou de crampon (3) par le dispositif de pose (6),
e. le retrait du dispositif de pose (6).

9. Procédé selon la revendication 8, **caractérisé en ce qu'**à l'étape c), les doigts d'écartement (7) sont espacés les uns des autres par le crampon (8).
